(19) Europäisches Patentamt
European Patent Office
Office européen des brevets

(11) **EP 2 807 443 B1**

## (12) EUROPEAN PATENT SPECIFICATION

(45) Date of publication and mention
of the grant of the patent:
**10.03.2021 Bulletin 2021/10**

(21) Application number: **13741598.0**

(22) Date of filing: **24.01.2013**

(51) Int Cl.:
*F41G 7/30* *(2006.01)*          *F41G 7/22* *(2006.01)*
*G05D 1/12* *(2006.01)*

(86) International application number:
**PCT/IL2013/050070**

(87) International publication number:
**WO 2013/111138 (01.08.2013 Gazette 2013/31)**

### (54) GUIDANCE LAWS FOR NAVIGATING VEHICLES

FÜHRUNGSGESETZE ZUM FÜHREN VON FAHRZEUGEN

LOIS DE GUIDAGE POUR VÉHICULES NAVIGANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.01.2012 IL 21773612**

(43) Date of publication of application:
**03.12.2014 Bulletin 2014/49**

(73) Proprietor: **Israel Aerospace Industries Ltd.**
**7010000 Lod (IL)**

(72) Inventors:
• **KAHANE, Allan, C.**
**76291 Rehovot (IL)**

• **SHALTIEL, Rabin**
**52404 Ramat Gan (IL)**

(74) Representative: **Grünecker Patent- und
Rechtsanwälte
PartG mbB
Leopoldstraße 4
80802 München (DE)**

(56) References cited:
**US-A- 4 494 202      US-A- 4 589 610
US-A- 6 006 145      US-A1- 2004 155 142
US-B1- 7 394 047      US-B1- 7 487 933**

• **MARK DEAN ILG: 'Guidance, Navigation, and
Control for Munitions' THESIS May 2008, pages I
- IX, 1 - 126, XP055078849**

**Description**

**FIELD OF THE INVENTION**

This invention relates to the field of navigating vehicles (such as an intercepting missile) towards a moving object (such as a moving target).

**BACKGROUND OF THE INVENTION**

The main role of interception guidance laws is to command maneuvers to a guided platform (e.g. an interceptor missile) towards collision with another object (target). In order to provide the interceptor with the maneuver commands, guidance laws typically rely on the current state of the interceptor, full or partial measurements of target's state relative to the interceptor or in absolute coordinates, and some assumptions about the further accelerations of both objects until collision. Each guidance law uses different assumptions regarding these further accelerations. For example, in the case of proportional Navigation Guidance, the target and the interceptor are assumed to have constant velocities until the end of the interception.

If these assumptions do not correlate with the actual interception scenario, a miss distance will occur. Since it is extremely difficult to establish a guidance law that will take into consideration all target and interceptor maneuver possibilities, miss distance is inevitable. In order to minimize such miss distances, most guidance laws rely on a guidance gain. As is well known in the art, until a certain limit, the higher the guidance gain, the less miss distance will occur. One of the disadvantages in using a guidance gain is that during interception, some unnecessary acceleration commands are given. As is further known in the art, if the guidance gain rises, the amount of unnecessary acceleration commands will rise. Guidance gain further amplifies noise and errors in target state measurement, up to loss of guidance law stability.

There are known in the art many types of guidance laws, including:

- Proportional Navigation: This guidance law assumes that the target and the interceptor will have constant velocities until interception occurs. Furthermore, it is assumed that the interceptor has unlimited maneuver capability.
- Augmented Proportional Navigation: This guidance law assumes that the target and the interceptor will have constant accelerations until interception occurs, but does not take into consideration the auto-pilot's dynamics. Furthermore, it is assumed that the interceptor has unlimited maneuver capability.
- Optimal Guidance: This guidance law takes into consideration the auto pilot's dynamics but assumes constant velocities of both the target and the interceptor until interception occurs. Even though the solution is obtained here as a tradeoff between the final miss distance and the maneuver requirements, no explicit limitations on the maneuver capability are taken into account.
- Predictive Guidance: This guidance law predicts the miss distance under the assumption that from initiation until interception, the interceptor is not maneuvering. This calculated miss is often called the "Zero Effort Miss" (ZEM). Thereafter, a maneuvering command is initiated to eliminate this miss. Note that the Zero Effort Miss and the maneuvering command are not consistent, since the maneuver itself may change the assumptions under which the miss was predicted. For example, in the case of atmospheric interception, the maneuver is achieved by changing the interceptor's angle of attack (AOA). This necessarily entails a change in the interceptor's drag coefficient, which is different than the one that was assumed in the ZEM prediction.

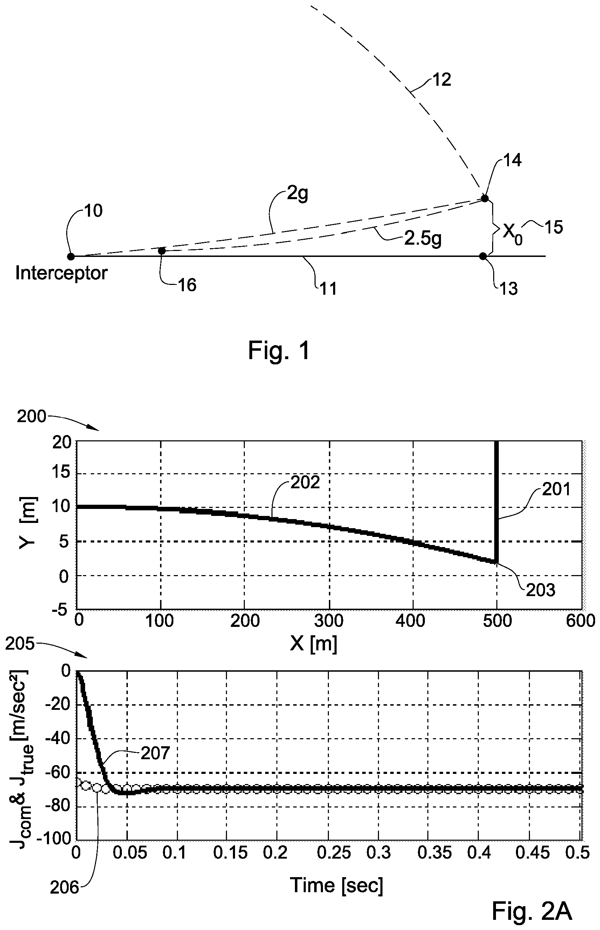

For a better understanding of the foregoing, attention is drawn to Fig. 1 illustrating a simplified scenario of a Zero Effort Miss (ZEM) guidance law, according to the prior art. Note that the numeric values in the example are provided for illustrative purposes only and do not necessarily represent a real-life scenario.

As shown, interceptor **10** flies along flight trajectory **11** in order to hit a target. In accordance with the ZEM approach, it is assumed that if the interceptor continues to fly along trajectory **11** without maneuvering and the target continues to fly along its designated flight trajectory **12** at the planned hit timing, the interceptor will be located at Final Point (FP) **13,** the target will be located at Final Intercepting Point FIP **14** and accordingly the estimated miss distance is $X_0$ meters **(15).** As per the ZEM approach, a calculation is made and it is assumed that the interceptor should develop a lateral acceleration at, say 2g in order to deviate from its current flight trajectory and eliminate the miss and consequently hit the target at FIP **14.** Appropriate maneuver commands (that correspond to the 2g lateral acceleration) are calculated and are transmitted (in the case of a missile) to the steering fins. Note that according to the ZEM, the maneuvering command takes into account an inherent constant drag deceleration $(A_{M\_DRAG\_0})$ that is imposed on the interceptor during flight and generates a sufficiently large acceleration command in order to cope with the constant drag deceleration and eliminate the miss.

As is well known, intuitively, insofar as a real life interceptor is concerned, there is a delay between the transmission of steering commands and the actual reflection thereof in the interceptor's maneuver, since it takes a while until mechanical movement of the fins occurs in response to receipt of steering commands, and even after the fins change position, it takes a while (yet further delay) until the interceptor's motion is affected by the change of the steering fins. This may be referred to in short as platform agility (or Autopilot dynamics), where the shorter the delay, the more agile is the platform.

According to the ZEM guidance law, it is assumed that the platform is ideal, i.e. it assumes that the platform's agility is very high, and, accordingly, the maneuvering command is reflected substantially instantaneously in the platform motion. In the latter example of the ZEM guidance law, it is assumed that the 2g lateral acceleration command will be reflected immediately as a 2g lateral acceleration motion of the platform.

However, for a real life platform, the agility is not infinite, and accordingly in the next cycle of calculation, it is likely that the interceptor has not, as yet, changed its path although appropriate maneuvering commands have been sent to the steering fins. Or, in other words, the interceptor (at current location **16**) is close to trajectory **11.** This being the case, there is lesser time to clear the X miss distance, since the interceptor is now closer to the target i.e. shorter "time to go" until hit (compared to the previous cycle of calculation). It is accordingly appreciated that in accordance with the ZEM guidance law, a stronger maneuvering command, say 2.5g, will be generated and converted to a corresponding command, which will be transmitted to the steering fins. As before, the specified command will take into account the constant drag deceleration, but will also assume an agile interceptor.

During the next iteration, the interceptor has already started to respond to the maneuvering command by deviating from trajectory **11,** namely, the new state of the steering fins has caused an increase in the platform's angle of attack ($A_{M\_Lift\_alpha}$) and consequently caused the interceptor to start and deviate from its original flight trajectory **11** according to the actual agility of the platform.

According to the ZEM guidance law, there is yet shorter time to clear the miss distance ("time to go" $t_{go}$), but the interceptor has already deviated from the original trajectory, and, accordingly, the miss distance is likely to decrease, and therefore the "strong" acceleration command may be reduced. Note that the increased angle of attack entails an induced drag due to maneuver $A_{M\_DRAG\_alpha}^2$ which is likely to slow down the platform.

The ZEM guidance law does not account for the induced drag due to maneuver, and this has implications, as will be explained in greater detail below. This sequence of calculations continues until successful kill is achieved (i.e. eliminating the miss distance), wherein, in each cycle of calculations, a new maneuvering command is calculated and converted to appropriate steering command to the steering fins. As will be exemplified below, in order to eliminate the miss distance and achieve kill, the maneuvering commands according to the ZEM are likely to become more intense as the interceptor approaches the target, and in certain scenarios may reach saturation, with the undesired consequence of missing the target.

As is further known in the art, it is generally desired to guarantee that there is significant maneuvering potential to direct the interceptor towards the target. Such intensified maneuvers may be performed at an earlier stage of navigation, leaving the final navigation stage with as little as possible maneuvering. This motivation stems, for example, from the fact that the shorter the time duration ($t_{go}$) to hit the target, the lower are the prospects to hit if the target abruptly accelerates and changes its estimated flight trajectory. It is accordingly appreciated, that it is desired to have very little planned maneuvering (i.e. mild maneuvering commands) when the interceptor approaches the target in order to allow the interceptor to achieve the kill. Thus, if the target surprisingly deviates from its estimated flight trajectory, at the final homing stage the interceptor can intensify the maneuvering commands and still hit even elusive targets. Hence, a guidance gain law is typically applied which, generally speaking, increases the maneuvering commands at an earlier stage and reduces them as the interceptor approaches the target.

It is readily evident that in the ZEM guidance law, the relatively large maneuvering commands are further intensified at the early tracking stage in order to comply with the specified guidance gain law. Guidance gain, as may be recalled, has significant shortcomings. The overly strong maneuvering commands at the initial guidance stage may result in an excess maneuver of the platform which will result in a miss in the opposite direction (i.e. not only that the X meters initial miss distance are eliminated, but a new miss in the opposite direction (-Y) meters is created) and, accordingly, counter strong maneuvering commands will be invoked to clear the opposite miss distance, giving rise to undue fluctuations in the maneuvering commands.

For a better understanding of the foregoing, attention is drawn to the following examples described with reference to Figs. 2A-D, illustrating the operation of the ZEM approach, in four respective hypothetical scenarios.

Thus, consider an interception scenario in which the initial states of the interceptor (M) and the target (T) in inertial coordinates are as follows:

Interceptor: $X_M = 0$ [m], $Y_M = 10$ [m], $VX_M = 1000$ [m/sec], $Vy_M = 0$ [m/sec]
Target: $X_T = 500$ [m], $Y_T = 503$ [m], $VX_T = 0$ [m/sec], $Vy_T = -1000$ [m/sec]

It is assumed that the target moves at a constant velocity. The interceptor, however, suffers a constant drag deceleration, $A_{M\_DRAG\_0}$

$A_{M\_DRAG\_0} = 10$ [m/sec$^2$].

The interceptor agility of building-up maneuvers is modeled as a 2$^{nd}$ order transfer function, that is:

$$\frac{A_{M-Lift}}{A_{M-Lift\_com}} = \frac{\omega_n^2}{s^2 + 2\cdot\xi\cdot\omega_n\cdot s + \omega_n^2}, \quad \omega_n = 2\cdot\pi\cdot 1.5 \left[rad/\sec\right], \; \xi = 0.7$$

and the maneuver command $A_{M\_Lift\_com}$ is computed by the guidance law at a rate of 100 Hz.

In a full information case, all of the abovementioned parameters are available for guidance computations. At each computation instance, the guidance law computes the miss and the time-to-go by propagating in time both the target and the interceptor. Note that the guidance law based on ZEM takes into account, during the propagation, only the constant drag deceleration, $A_{M\_DRAG\_0}$ $A_{M\_DRAG\_0}$ (zero effort assumption) and computes the maneuver command:

$$A_{M\_Lift\_com} = 2*ZEM/t_{go}^2$$

(note that there is no guidance gain)

As may be recalled, the ZEM guidance law does not take into account the induced drag due to maneuver $A_{M\_DRAG\_alpha}^2$ and the auto-pilot time constant.

Attention is now drawn to a first hypothetical scenario referred to herein as "Ideal interceptor". In this hypothetical scenario, the Interceptor agility is 10 times faster than previously stated (that is $\omega_n = 2\cdot\pi\cdot 15$ (rad/sec) and there is no induced drag due to maneuver (i.e. $A_{M\_DRAG\_alpha}^2 = 0$).

Fig 2A shows graphs that correspond to the first hypothesis. Thus, as shown in graph 200 of Fig. 2A (illustrating (X,Y) location), the target flies along flight trajectory 201 and the interceptor flies along flight trajectory 202 and the interceptor hits the target at Final Interceptor Point (FIP) 203. Turning now to graph 205 it illustrates the maneuver command and the actual maneuver of the interceptor (ordinate) over time (abscissa). As shown, the maneuvering commands 206 (dotted curve) are nearly instantaneously reflected in the interceptor's maneuver 207 (continuous curve) due to the agile characteristics of the interceptor and the fact that according to this "ideal interceptor" hypothesis there is no induced drag due to maneuver.

Turning now to the second hypothesis, the interceptor is still agile (similar to the first hypothesis ($\omega_n = 2\cdot\pi\cdot 15$ (rad/sec)), however in departure from the first hypothesis there is an induced drag due to maneuver, i.e. the larger the angle of attack (in response to maneuvering command) the higher the drag, and by this example $A_{M\_DRAG\_alpha}^2 = 500$[m/sec$^2$/rad$^2$]).

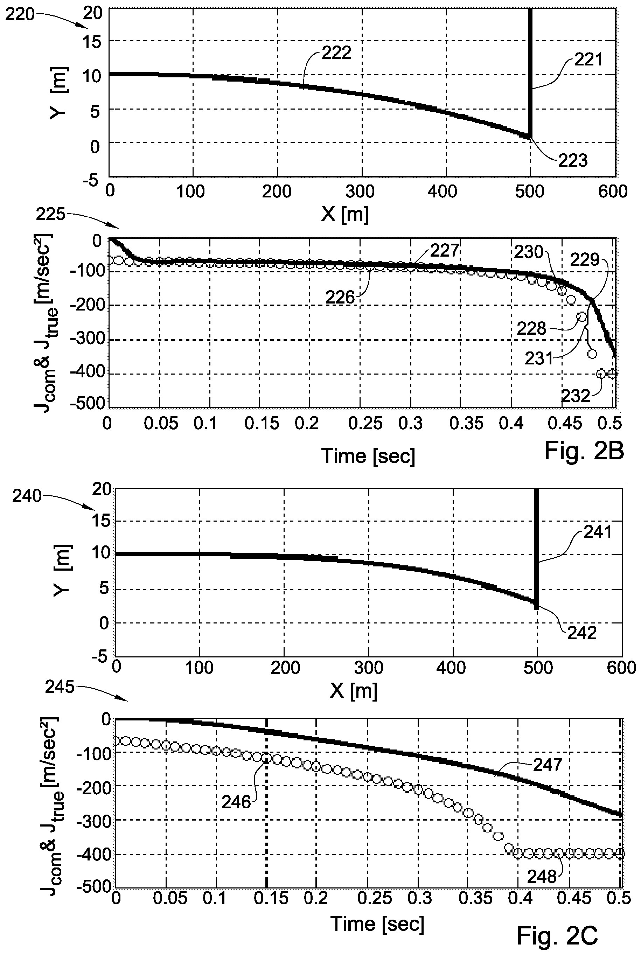

Fig 2B shows graphs that correspond to the second hypothesis. Thus, as shown in graph 220 of Fig. 2B (illustrating (X,Y) location), the target flies along flight trajectory 221 and the interceptor flies along flight trajectory 222 and the interceptor hits the target at Final Interceptor Point (FIP) 223. Turning now to graph 225 it illustrates the maneuver command and the actual maneuver of the interceptor (ordinate) over time (abscissa). As shown, the maneuvering commands 226 (depicted as dotted line) are nearly instantaneously reflected in the interceptor's maneuver 227 (depicted as continuous line) due to the agile characteristics of the interceptor. However, as the interceptor approaches the target, the command's intensity (228) deviates from the actual maneuver of the interceptor (229). The reason is that whilst the interceptor is indeed agile (and accordingly maneuvering commands should nearly "instantaneously" be reflected in the interceptor's actual maneuver), the interceptor gains an induced drag due to maneuver (which is ignored by the ZEM guidance law). Moreover, when the maneuver increases, the angle of attack follows suit and yet further drag due to maneuver is induced. The net effect of the induced drag is that the interceptor slows down and the actual maneuvering thereof e.g. 229 is slower than what the command would have prescribed (according to the ZEM guidance law) e.g. 228. In order to compensate for this discrepancy, a more intensified command is invoked, since otherwise the interceptor would miss the target. The intensified command, whilst improving the maneuver of the interceptor, generates yet larger induced drag to maneuver, and the gap between the command and the actual maneuver, as reflected in the respective gaps 230, 231 increases. Eventually the command saturates 232, but as this happens at the very final stage of the guidance, the interceptor nevertheless succeeds in hitting the target (the specified FIP 223).

Turning now to the third hypothesis, it assumes (in contrast to the previous two hypotheses) a non-agile interceptor ($\omega_n = 2\cdot\pi\cdot 1.5$ (rad/sec)) i.e. 10 times slower than the interceptors according to the previously discussed hypotheses, however similar to the first hypothesis there is no induced drag due to maneuver, but rather only constant drag.

Fig 2c shows graphs that correspond to the third hypothesis. As readily arises from graph 240 (and in contrast to the previously discussed scenarios) there is a miss. Namely, when the interceptor arrives to FIP 241, the target has already traversed this point and is located at 242.

Turning now to graph **245** it illustrates the maneuver command and the actual maneuver of the interceptor (ordinate) over time (abscissa). As shown, the maneuvering commands **246** do not take into account the non-agility characteristics of the interceptor and it therefore "assumes" that commands are readily reflected in the interceptor's maneuver. However, due to the degraded agility of the interceptor, the invoked commands according to the ZEM guidance laws are slowly exhibited in the interceptor's behavior and accordingly a more intensified command is invoked (as readily shown in the ever decreasing graph **246** over time, where the more negative the command - ordinate - the more intensified is the maneuvering command) in order to compensate for the degraded performance of the interceptor. The so intensified command is further subjected to the degraded agility, and is thus further delayed until fully reflected in the interceptor's performance. It is thus evident that the "gap" between the command's intensity and the platform actual maneuvering **(247)** just increases over time. This trend continues until the command's intensity saturates **248,** namely it cannot be further increased, leading to the specified inevitable miss as depicted in graph **240.**

Turning now to the fourth hypothesis, it assumes a "real interceptor" i.e. a non-agile interceptor ($\omega_n = 2 \cdot \pi \cdot 1.5$ (rad/sec)) as was the case in the third hypothesis and also that there is an induced drag due to maneuver as was the case in the second hypothesis i.e. the larger the angle of attack (in response to maneuvering command) the higher the drag, and by this example $A_{M\_DRAG\_alpha}{}^2 = 500[m/sec^2/rad^2]$).

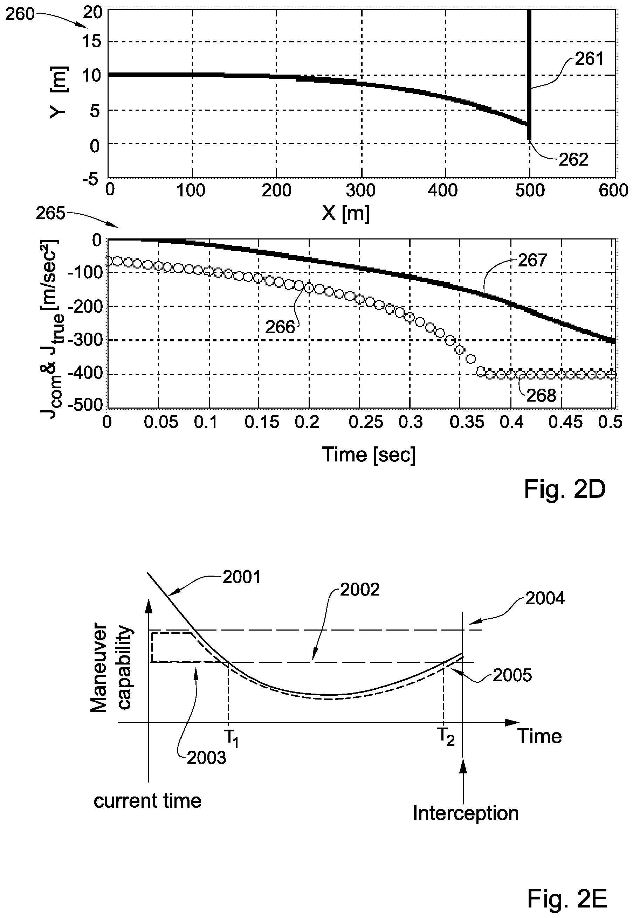

Fig 2D shows graphs that correspond to the fourth hypothesis. Not surprisingly, as readily arises from graph **260** there is a miss. Namely, when the interceptor arrives to FIP **261,** the target has already traversed this point and is located at **262.** Note that the miss distance is larger than the miss demonstrated in the third hypothesis discussed above.

Turning now to graph **265** it illustrates the maneuver command and the actual maneuver of the interceptor (ordinate) over time (abscissa). As shown, the maneuvering commands (according to the ZEM guidance laws) **266** (depicted in dotted line) does not take into account the non-agility characteristics of the interceptor and also the induced drag due to maneuver. However, due to the degraded agility as well as the induced maneuvering drag, the interceptor's behavior does not follow the command (in even worse performance compared to the third hypothesis) and, accordingly, a more intensified command is invoked (as readily shown in the ever decreasing graph **266** over time). The so intensified command is further subjected to the degraded agility and induced maneuver drag of the interceptor. It is thus evident that the "gap" between the command's intensity **266** and the platform's actual maneuvering **(267)** just increases over time. This trend continues until the command's intensity saturates **268** (even earlier than the previously discussed third hypothesis, i.e. after 0.37 sec have elapsed compared to 0.4 sec in curve **246** of graph **245**), leading to the inevitable miss. Note that in accordance with the prior art, the specified miss may be compensated e.g. by applying an aggressive guidance gain, and/or by activating higher intensity thrust in order to increase maneuvering capacity and/or employing more destructive kill heads, etc. Note, however, that all of these solutions suffer from the aforementioned drawbacks of the known in the art guidance laws and may increase interceptor costs.

Two major drawbacks have been pointed out and exemplified. The first drawback is due to disregard of the limited agility of the interceptor during the computation of the maneuver command that is initiated to close the miss-distance. Such disregard, especially during the last moments of interception, has, amongst others, a negative effect on the chances of hitting the target. The second drawback is due to the omittance of the induced drag due to maneuver in the maneuver command computation. This omittance, especially during the midcourse of the interceptor's flight, has a negative effect on the interceptor's ability to cope with a large miss-distance.

Attention is now drawn to a third drawback, that disregards the fact that interceptors have bounded maneuver capability and these bounds are functions of the interception trajectory. For example, (with reference also to Fig. 2E), consider the case of an atmospheric interception, where maneuver capability of the interceptor, along with the interception trajectory, varies, as depicted in Fig. 2E (line **2001**), due to the fact that the interceptor travels through different atmospheric layers and its velocity is continuously decreasing. Assume now that a ZEM computation is performed, and that a constant maneuver command (no guidance gain) is initiated to close the miss (line **2002**). The actual maneuver is described by line **2003.** Until time T1 the actual maneuver follows the command, therefore the command remains constant. After that, even though the interceptor performs its maximum maneuver capability, this is insufficient, and the target is missed.

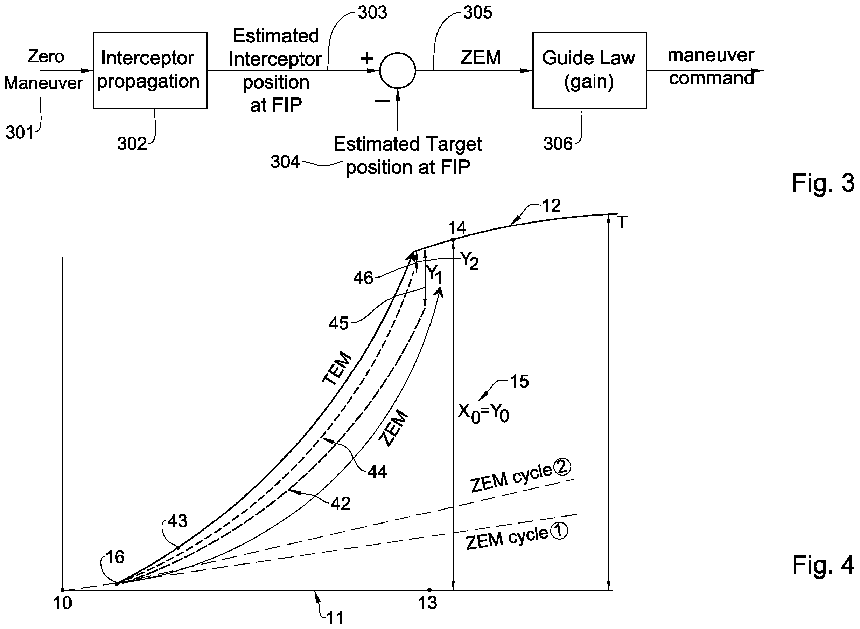

Attention is now drawn to Fig. 3, illustrating a general system architecture of the Zero Effort Miss (ZEM) guidance law, in accordance with the prior art. Thus, a zero maneuvering command **301** is fed to interceptor propagation module **302** which propagates the interceptor state vector (i.e. current interceptor spatial location) to find the estimated flight trajectory for the "time to go" duration whilst taking into account the interceptor's drag at a zero AOA. The resulting estimated Final Point of the interceptor **303** is compared to the estimated Final Interception Point (FIP) **304** of the target (after "time to go"). The difference indicates the miss distance (ZEM) **305.** In the case of utilizing Guide gain guidance law, the intensified gain **306** is applied to the miss distance, giving rise to a new maneuver command **307.**

US 6,006,145 discloses a method and apparatus for directing a pursuing vehicle, such as a torpedo, on an intercept trajectory from a launching vehicle to a target vehicle with evasion capabilities. Models of the pursuing vehicle and evading target provide proposed trajectories based upon various environmental considerations. A guidance system uses estimates of initial operating parameter solutions, such as gyro angle, alertment time and intercept time, to begin a convergent, iterative process that defines final operating parameter solutions from which the guidance parameters are determined and transferred to the pursuing vehicle at launch. During each iteration, the solution determines an alertment time and an alertment bearing from the target vehicle to the pursuing vehicle at the alertment time. A selected evasive strategy includes a turn that is calculated relative to the alertment bearing.

US 2004/0155142 discloses a system and method that guides a device to an object using periodically adaptive guidance. The guidance and control system creates a reconstructed line-of-sight (LOS) vector to avoid system destabilization associated with small angle approximations during high bore sight engagements. The guidance system adaptively estimates the periodic maneuver of evasive objects with a set of harmonically balanced Kalman filter banks. The Harmonically Balanced Kalman filter banks generate a set of probabilities that weight the effect of each individual Kalman filters on a resultant guidance command signal. The guidance command signal generated by the system acts perpendicular to the object LOS. The guidance and control system uses vectored proportional navigation guidance laws, optimal proportion navigation laws and periodically adaptive augmented guidance laws to generate a guidance command signal to supply to an autopilot.

US 7,487,933 discloses a system, processing structure and method for performing vehicle intercept which includes target acceleration estimation or blocking via a filter prior to deriving an interceptor acceleration time history via a guidance law. In the processing structure where the unknown target accelerations are blocked from affecting estimates, a guidance law is generated, stored and retrieved accounting for worst case target acceleration. In the processing structure where the target acceleration is presumed constant with a constant bank angle, the guidance law is closed form, exploiting constant heading angular velocity, and thus generated online.

US 7,394,047 discloses a fire control system for a boost phase threat missile which includes sensors for generating target-missile representative signals, and a multi-hypothesis track filter, which estimates the states of various target hypotheses. The estimated states are typed to generate hypotheses and their likelihoods. The states, hypotheses and likelihoods are applied to a multihypothesis track filter, and the resulting propagated states are applied to an engagement planner, together with the hypotheses and likelihoods. The engagement planner initializes the interceptor(s). Interceptor guidance uses the initialization and the propagated states and typing information to command the interceptor.

As discussed above, there is a need in the art to reduce the guidance gain and there is further need in the art to take into account other factors which affect future maneuvering of the interceptor such as induced drag due to maneuver auto-pilot dynamics (interceptor's agility) and the actual maneuver capability of the interceptor along the future path, thereby reducing the intensity of the maneuvering commands until successful kill is achieved.

## SUMMARY OF THE INVENTION

The invention is defined by the appended claims. What is not included in their scope must be regarded as technical information.

## BRIEF DESCRIPTION OF THE DRAWINGS

In order to understand the invention and to see how it may be carried out in practice, a preferred embodiment will now be described, by way of non-limiting example only, with reference to the accompanying drawings, in which:

Fig. 1 illustrates a simplified scenario of a Zero Effort Miss (ZEM) guidance law, according to the prior art.
Fig. 2A-2D illustrate four exemplary hypotheses of operational scenarios according to the known Zero Effort Miss (ZEM) guidance law;
Fig. 2E illustrates an exemplary hypothesis of an operational scenario according to the known ZEM guidance law;
Fig. 3 illustrates a general system architecture of the Zero Effort Miss (ZEM) guidance law, in accordance with the prior art;
Fig. 4 illustrates a simplified scenario of a True Effort Miss (TEM) guidance law, according to certain embodiments of the invention;
Figs. 5A-5D illustrate four exemplary hypotheses of operational scenarios according to the True Effort Miss (TEM) guidance law;
Fig. 6 illustrates a general block diagram of a "true effort miss" guidance law module, fitted in a platform, in accordance with certain embodiments of the invention;
Fig. 7 illustrates a generalized block diagram of a system, in accordance with certain embodiments of the invention; and
Fig. 8 illustrates a "true effort miss" guidance law module, fitted in a missile, in accordance with various embodiments of the invention.

**DETAILED DESCRIPTION OF THE INVENTION**

For convenience of explanation, reference in the description below is made to an interceptor (e.g. missile). Those versed in the art will readily appreciate that a platform according to the invention can be any vehicle that is subjected to guidance towards a target.

Attention is now drawn to Fig. 4 illustrating a simplified scenario of a True Effort Miss (TEM) guidance law, according to certain embodiments of the invention. For a better understanding of the TEM vs. the ZEM, the scenario provided with reference to Fig. 4 resembles that of Fig. 1.

As shown in Fig. 1, interceptor **10** flies along flight trajectory **11** in order to hit a target. In accordance with the ZEM approach, it is assumed that if the interceptor continues to fly along trajectory **11** without maneuvering and the target continues to fly along its designated flight trajectory **12** at the planned fly by, the interceptor will be located in Final Intercepting Point (FIP) **13**, the target will be located in Final Interception Point (FIP) **14** and, accordingly, the estimated miss distance is $X_0$ **(15)**. As per the TEM guidance laws in accordance with certain embodiments of the invention, the first cycle of calculation is identical to that of the ZEM. In the next cycle of calculation, when the interceptor is located at **16,** a calculation is made and it is assumed that the interceptor should develop a lateral maneuver in order to deviate from its current flight trajectory (close to **11**) into a new trajectory **42**. The calculation result is a true effort miss $Y_1$ **(45)**. The maneuvering command is updated in order to close $Y_1$. **(45)** and hitting the target at FIP **14.** In other words, the interceptor vehicle's equations of motion according to the maneuvering command are propagated for estimating an interceptor's position at the FIP, and considering the estimated target position at FIP, the miss can be calculated. Moreover, the maneuvering command according to the TEM guidance laws takes into account the auto-pilot dynamics (i.e. interceptor's agility) and the induced drag due to maneuver of the interceptor as well as its varying maneuver capability. The latter phenomena (of auto-pilot dynamics and maneuver induced drag and varying maneuver capability) slow down the performance of the interceptor. Thus, the guidance law, according to the TEM, estimates, in-advance, the adverse effect of the auto-pilot dynamics, the maneuver induced drag and the limited maneuvering capability of the interceptor, and calculates a maneuvering command which attempts to overcome the specified effects.

In the next cycle of calculation, when the interceptor is located at **43,** another calculation (trajectory **44**) is made again taking into account the specified factors resulting is a true effort miss ($Y_2$, **46)**. The maneuvering command is updated in order to close $Y_2$.**(46)** and hitting the target at FIP **14.**

Note that the specified true miss $Y_2$ is likely to be smaller than a corresponding miss $X_2$ (according to the ZEM) *inter alia* because in the TEM, the "real life interceptor" auto-pilot dynamics, maneuver induced drag as well as the varying maneuvering capability effects were taken into account. Note also that the specified miss $Y_2$ may be larger than 0, since there are additional effects (such as Sensor's intrinsic errors), which may nevertheless affect the behavior of the interceptor.

In the next iteration of calculation, it is noted that the interceptor will nevertheless miss the FIP by a true miss which is likely to be smaller than the true effort miss of the previous cycle of calculation. Note that in each cycle the resulting miss distance is likely to decrease since the interceptor approaches the target and any unanticipated factors which may affect the deviation of the interceptor from its designated trajectory will be of lower scale considering the shorter propagation time (time to go) of any such disrupting factor until the hit timing.

The net effect is convergence of the calculated miss distance from initial value (Y in this particular example) into 0 when the interceptor's FIP eventually coincides with the FIP **14** where successful hit is achieved.

Note that due to the fact that the TEM guidance laws in accordance with certain embodiments of the invention stipulate propagation of the interceptor's equation of motion throughout the entire motion of the interceptor whilst taking into account at least the auto-pilot dynamics, the maneuver induced drag and varying maneuvering capability effects, a reduced estimated miss is achieved. The latter entails a relatively moderate change in the maneuvering command in every cycle of calculation.

In accordance with certain embodiments, more moderate maneuvering commands have inherent advantages including that the undesired guidance gain law (discussed above) is more controlled (and in certain cases is not used at all) and the maneuvering commands are therefore less susceptible to fluctuations.

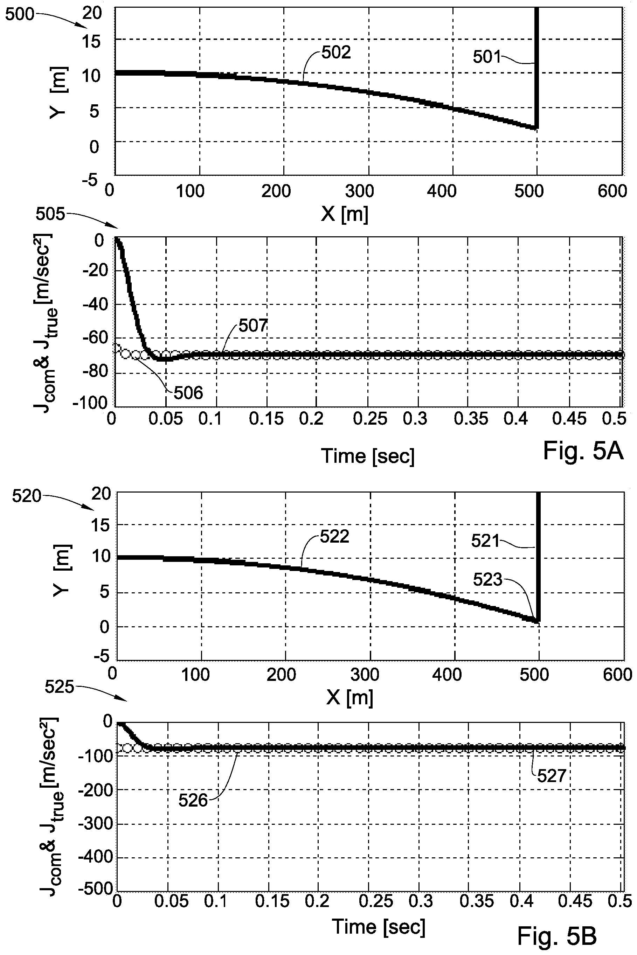

For a better understanding of the foregoing, the four exemplary hypotheses discussed above will be analyzed according to the True Effort Miss (TEM) guidance law and with reference also to Figs. 5A-D (copying, by this example, only the maneuver induced drag and auto Pilot dynamics).

Thus, in addition to the assumption discussed with reference to the ZEM guidance law above, it is assumed that the aerodynamic maneuver potential is $A_{M\_Lift\_alpha} = 10[m/sec^2/deg]$ and the maneuver induced drag (dependent on the square of its angle of attack) is $A_{M\_DRAG\_alpha}^2 = 500[m/sec^2/rad^2]$.

Accordingly, in accordance with certain embodiments, the TEM guidance law complies with the following:

$$A_{M\_Lift\_com\_new} = A_{M\_Lift\_com\_previous} + 2 * TEM/t_{go}^2,$$

where

$A_{M\_Lift\_com\_new}$ signifies the new maneuvering command in the current cycle of computation according to the TEM guidance law;

$A_{M\_Lift\_com\_previous}$ signifies the maneuvering command in the previous cycle of computation according to the TEM guidance law;

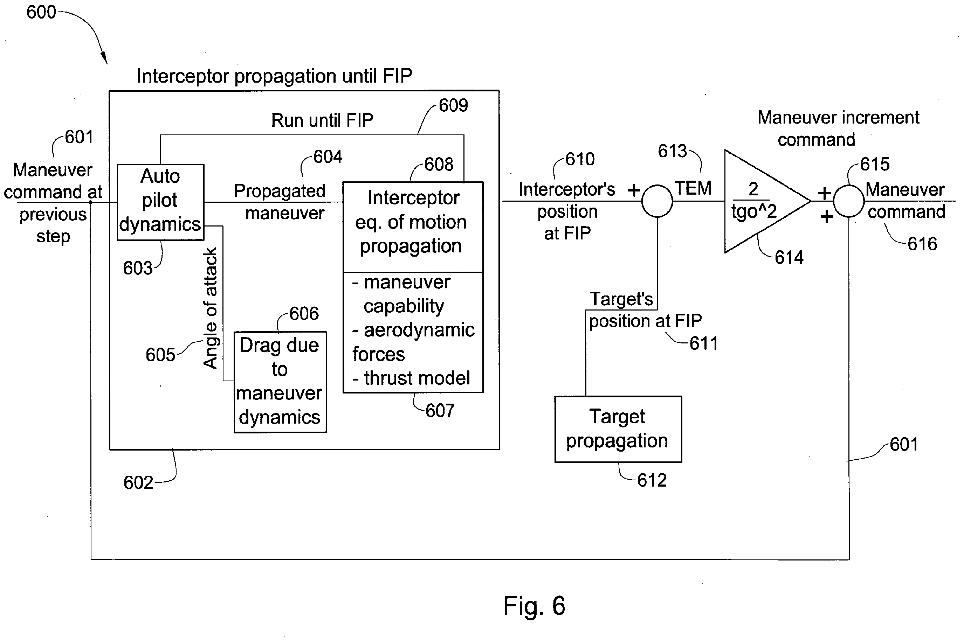

TEM signifies the true calculated miss; see further explanation with reference to Fig. 6 below.

$t_{go}$ signifies "time to go", the time until hit.

Turning at first to the first hypothetical scenario, referred to herein as "Ideal interceptor". As may be recalled by this scenario, the interceptor agility is 10 times faster than previously stated (that is, $\omega_n = 2 \cdot \pi \cdot 15$ (rad/sec) and there is no induced drag due to maneuver (i.e. $A_{M\_DRAG\_alpha}^2 = 0$).

Fig 5A shows graphs that correspond to the first hypothesis. Thus, as shown in graph **500** of Fig. 5A (illustrating (X,Y) location), the target flies along flight trajectory **501** and the interceptor flies along flight trajectory **502** and the interceptor hits the target at Final Interceptor Point (FIP) **503**. Turning now to graph **505** it illustrates the maneuver command and the actual maneuver of the interceptor (ordinate) over time (abscissa). As shown, the maneuvering commands **506** are nearly instantaneously reflected in the interceptor's maneuver **507** due to the agile characteristics of the interceptor and the fact that according to this "ideal interceptor's" hypothesis there is no induced drag due to maneuver. Accordingly, in the case of an ideal interceptor, the ZEM and TEM guidance laws perform in the same ways and the target is intercepted.

Turning now to the second hypothesis, the interceptor is still agile (similar to the first hypothesis ($\omega_n = 2 \cdot \pi \cdot 15$ (rad/sec)), however in departure from the first hypothesis there is induced drag due to maneuver, i.e. the larger the angle of attack (in response to maneuvering command) the higher the drag, and by this example $A_{M\_DRAG\_alpha}^2 = 500[m/sec^2/rad^2]$).

Fig 5B shows graphs that correspond to the second hypothesis. Thus, as shown in graph **520** of Fig. 5B (illustrating (X,Y) location), the target flies along flight trajectory **521** and the interceptor flies along flight trajectory **522** and the interceptor hits the target at Final Interceptor Point (FIP) **523**. Turning now to graph **525** it illustrates the maneuver command and the actual maneuver of the interceptor (ordinate) over time (abscissa).

As shown, the maneuvering commands **526** (depicted as dotted line) are nearly instantaneously reflected in the interceptor's maneuver **527** (depicted as continuous line) due to the agile characteristics of the interceptor. In contrast, according to the ZEM, the command saturated as the interceptor approached the target. This implies, among the others, that the TEM guidance law can cope with larger initial miss distances than the ZEM guidance law.

Turning now to the third hypothesis it assumes (in contrast to the previous two hypotheses) a non-agile interceptor ($\omega_n = 2 \cdot \pi \cdot 1.5$ (rad/sec)) i.e. 10 times slower than the interceptors according to the previously discussed hypotheses, however, similar to the first hypothesis, there is no induced drag due to maneuver, but rather only constant drag.

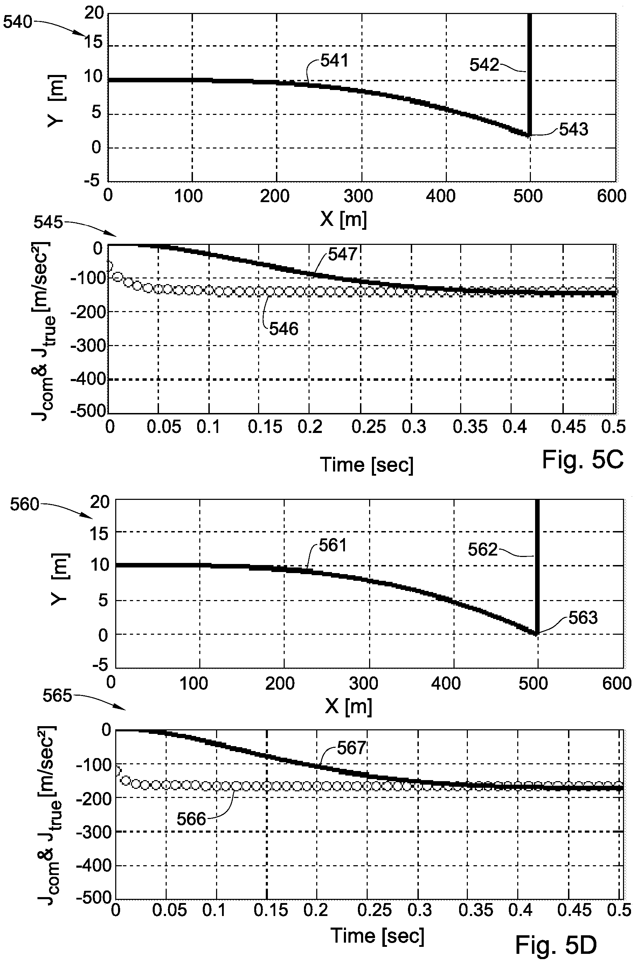

Fig 5C shows graphs that correspond to the third hypothesis. As readily arises from graph **540** (and in contrast to corresponding ZEM interception scenarios) there is a hit. Namely, the interceptor flies along trajectory **541,** the target flies along trajectory **542** and the interceptor hits the target at FIP **543.**

Turning now to graph **545** it illustrates the maneuver command and the actual maneuver of the interceptor (ordinate) over time (abscissa). As shown, due to the non-agile characteristics of the interceptor, there is a delay in response to the interceptor's maneuvering the maneuvering command **546** to the command **547.** However, in contrast to the ZEM guidance law, this non-agile characteristic is accounted for, and, accordingly, a more intensified maneuvering command is invoked in advance (around - 130 compared to around -80 in the counterpart ZEM scenario - see Fig. 2C). Note also that the TEM maneuvering command remains almost constant during the interception, implying, amongst others, that a larger initial miss-distance can be coped with. This is in contrast to the ZEM command which saturates at an early stage of the interception scenario.

Turning now to the fourth hypothesis, it assumes a "real interceptor" i.e. a non-agile interceptor ($\omega_n = 2 \cdot \pi \cdot 1.5$ (rad/sec)) as was the case in the third hypothesis, and also that there is an induced drag due to maneuver, as was the case in the second hypothesis i.e. the larger the angle of attack (in response to a maneuvering command) the higher the drag, and by this example $A_{M\_DRAG\_alpha}^2 = 500[m/sec^2/rad^2]$).

Fig 5D shows graphs that correspond to the fourth hypothesis. As readily arises from graph **560** (and in contrast to corresponding ZEM interception scenarios) there is a hit. Namely the interceptor flies along trajectory **561,** the target flies along trajectory **562** and the interceptor hits the target at FIP **563.**

Turning now to graph **565** it illustrates the maneuver command and the actual maneuver of the interceptor (ordinate) over time (abscissa). As shown, due to the non-agile characteristics of the interceptor, there is a delay in response to the interceptor's maneuver **566** to the command **567**. However, in contrast to the ZEM guidance law, this non-agile characteristic as well as the maneuver induced drag are accounted for and, accordingly, a more intensified maneuvering command is invoked in advance (around - 180 compared to around -130 in the third hypothesis which had to take into account only the non agile characteristic of the interceptor, see Fig. 5C). Note also that the TEM maneuvering command remains almost constant during interception, implying, amongst others, that a larger initial miss-distance can be coped with. This is in contrast to the ZEM command, which saturates at an early stage of the interception scenario.

The specified hypotheses were provided for illustrative purposes and for clarity of explanation only.

In accordance with certain embodiments, the True Effort Miss (TEM) guidance law copes with the previously stated limitation of existing guidance laws, that is disregard of the fact that the interceptor maneuver capability is bounded, and these bounds are functions of the interceptor trajectory. Clearly, since in the TEM guidance law the interceptor equations of motion are propagated by taking into account both the maneuver command and the instantaneous maneuver capability, a magnified command (**2004** - Fig.2E) will be initiated. The resulting maneuver (**2005**) will correctly close the initial miss-distance and, therefore, the target will be intercepted.

Attention is drawn to Fig. 6 illustrating a general block diagram **600** of a "true effort miss" guidance law module, fitted in a platform, in accordance with certain embodiments of the invention.

As shown, a maneuver command **601** (e.g. 0 at a first iteration of calculation) is fed to an "Interceptor Propagation until FIP" module **602** and more specifically to an Auto - Pilot dynamics module **603**. The latter calculates in a known *per se* manner the propagated maneuver **604** as well as the angle of attack **605**. The latter data is fed to module "Drag Due to Maneuver Dynamics" (**606**) which yields the specified Drag Due to Maneuver Dynamics $A_{M\_DRAG\_alpha}^2$ value. The latter data is fed together with the calculated propagated maneuver value **604** as well as other known *per se* parameters extracted from database **607** (such as thrust model, aerodynamics forces - e.g. constant drag $A_{M\_DRAG\_0}$ - other than specified Drag Due to Maneuver) to Interceptors Equation of Motion Propagation module **608,** which in a known *per se* manner calculates (in a closed loop fashion **609**) the estimated Interceptor's position at FIP **610**. In parallel, the estimated Target Position at FIP **611** is calculated by a known *per se* module **612** and this data is deducted from the estimated Interceptor's position at FIP **610** giving rise to the specified true miss distance (TEM) **613**. The TEM is subjected to amplification by a factor of $2/t_{go}^2$ **614** and after adding the previous command ($A_{M\_Lift\_com\_previous}$) **601** (utilizing adder **615**) a new acceleration command ($A_{M\_Lift\_com\_new}$ **616)** is generated , all in compliance with the specified guidance law (discussed above)

$A_{M\_Lift\_com\_new} = A_{M\_Lift\_com\_previous} + 2 \ast TEM/t_{go}^2$. The new command will now be fed as an input (**601**) for calculating the TEM in the following iteration and arrive at yet new $A_{M\_Lift\_com\_new}$ command.

This iterative procedure is continued until the TEM is substantially reduced or eliminated, as exemplified in the operational scenarios of Fig. 5.

Note that the invention is not bound by the specific system architecture of Fig. 6.

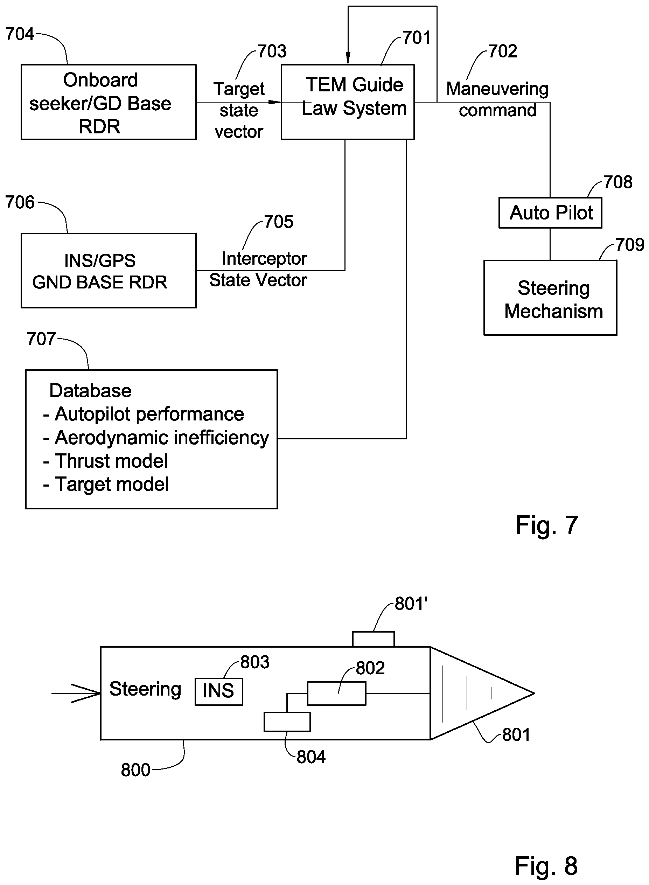

Bearing this in mind, attention is drawn to Fig. 7, illustrating a generalized block diagram of a system, in accordance with certain embodiments of the invention.

As shown, the TEM guide law module **701** generally performs the operations described in detail with reference to Fig. 6, for generating a maneuvering command **702** (see **616** of Fig. 6) . To this end, the target state vector **703** is required (that will be fed to the target propagation module **612** - see Fig. 6) which can be determined utilizing e.g. known *per se* on-board seeker which tracks the target, or e.g. a ground radar tracking the target and transmits the target vector data to the interceptor (**704**).

Also the current interceptor's state vector **705** is required (for Interceptor equation of motion propagation module **608** in Fig. 6), and this may be determined e.g. by utilizing on-board GPS and/or INS and/or utilization of ground radar which tracks the interceptor **706**.

Furthermore, database **707** stores data required to carry out the calculations of the TEM guidance module **701**. For instance, in order to calculate auto pilot dynamics and to apply the interceptor's equations of motion propagation (see e.g. modules **603** and **608,** respectively) additional data are required, such as known *per se* Auto -Pilot (AP) performance data required for calculating AP Dynamics **603,** as well as Aerodynamics coefficients required for calculating e.g. Interceptor's equation of motion (module **608),** target model data that is required for calculation of target propagation (see module **612**) and a trust model that is required for calculating engine trust (used in **603** and **608**). The specified content of database **707** is an example of vehicle related data.

Having calculated the maneuvering command **702** it is fed to the known *per se* Auto-Pilot module **708** and Steering mechanism **709** modules for actually steering the interceptor, as well as a feedback to TEM guide law system **701** (see also **601** of Fig. 6).

Note that the invention is not bound by the system architecture of Fig. 7.

Turning now to Fig. 8, it illustrates a "true effort miss" guidance law system, fitted in a missile, in accordance with various embodiments of the invention. Thus, for example seeker module (and associated warhead) **801** can be accommodated at the head portion of the missile or in accordance with certain other embodiments at the side surface of **801',** all as generally known *per se.* The seeker may be fitted in other known *per se* locations. The system **802** described e.g. with reference to Fig. 7, gets data not only from the seeker but also from INS **803** and ground radar data obtained through antenna module **804.** Note that the interceptor illustration of Fig. 8 is by no means binding and the deployment of the system of the invention within a platform such as interceptor missile **800** can be in various forms and integrated with the other interceptor systems, all depending upon the particular application.

Note that whereas the invention has been exemplified with respect to a TEM guidance law that copes with auto-pilot dynamics, maneuver induced drag and varying maneuver capability effects, those versed in the art will readily appreciate that in accordance with certain embodiments any of the specified effects taken separately or in any combination, may be utilized.

In accordance with certain embodiments, the specified effects constitute an example of a more generic effect, namely lack of consistency between the assumptions made to calculate the maneuver command and the actual performance when attempting to realize the command. The latter may be affected, for example, by any of the specified effects.

Thus, in accordance with an aspect of the invention, there is provided a system (as described and illustrated by way of example with reference to Figs. 6 and 7) of providing guidance laws for maneuvering a vehicle for reducing or eliminating miss distance to a target, comprising:

a system configured to provide a command for maneuvering the vehicle towards a target;
a system configured to repeatedly perform the following stages until eliminating said miss distance, including:

i. propagating vehicle's equation of motion as a result of the command while reducing or eliminating lack of consistency between the assumptions made to calculate the maneuver command and the actual performance when attempting to realize the command;
ii. calculating miss distance to the target; and
iii. updating the command for reducing or eliminating the miss distance and sending the command to a steering system of the vehicle.

It should be noted that the logic may reside in the external (e.g. ground station), or all of the logic is accommodated partially or wholly in the intercepting missile, and is selected depending upon the particular application, and possibly operational constraints.

As used herein, the phrase "for example," "such as" and variants thereof describing exemplary implementations of the present invention are exemplary in nature and not limiting. Reference in the specification to "various embodiments", "other embodiments", "certain embodiments", "aspect" "subject matter" or variations thereof means that a particular feature, structure or characteristic described in connection with the embodiment(s)/aspect is included in at least one embodiment/aspect of the invention. Thus the appearance of the phrase "certain embodiment", "various embodiment", "other embodiments", "aspect" or variations thereof do not necessarily refer to the same embodiment(s). It is appreciated that certain features of the invention, which are, for clarity, described in the context of separate embodiments/aspect, may also be provided in combination in a single embodiment. Conversely, various features of the invention, which are, for brevity, described in the context of a single embodiment, may also be provided separately or in any suitable combination of other embodiment(s)/aspect.

While the invention has been shown and described with respect to particular embodiments, it is not thus limited. Numerous modifications, changes and improvements within the scope of the invention will now occur to the reader. In embodiments of the invention, fewer, more and/or different blocks than those shown in Figs 6 or 7 may be executed. The modules/blocks in Figures 6 or 7 may be centralized in one location or dispersed over more than one location. In other embodiments of the invention, the system may comprise fewer, more, and/or different modules than those shown in Figure 6 or 7.

Unless specifically stated otherwise, as apparent from the following discussions, it is appreciated that throughout the specification discussions, utilizing terms such as , "processing", "computing", "calculating", "determining", "evaluating", "analyzing", "estimating", "propagating", "feeding", "modifying", "updating", "sending" or the like, refer to the action and/or processes of a computer or computing system, or processor or similar electronic computing device, that manipulate and/or transform data represented as physical, such as electronic, quantities within the computing system's registers and/or memories into other data, similarly represented as physical quantities within the computing system's memories, registers or other such information storage, transmission or display devices.

Embodiments of the present invention may use terms such as, processor, computer, apparatus, system, subsystem, module, unit, device (in single or plural form) for performing the operations herein. This may be specially constructed for the desired purposes, or it may comprise a general purpose computer selectively activated or reconfigured by a computer program stored in the computer. Such a computer program may be stored in a computer readable storage medium, such as, but not limited to, any type of disk including optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, any other type of media suitable for storing electronic instructions that are capable of being conveyed via a computer system bus.

It will also be understood that the system/method according to the invention may be a suitably programmed computer. Likewise, the invention contemplates a computer program being readable by a computer for executing the method of the invention. The invention further contemplates computer program product that includes a machine-readable memory tangibly embodying a program of instructions executable by the machine for executing the method of the invention.

While the invention has been described with certain degree of particularity, those versed in the art will readily appreciate that various alterations and modifications may be carried out, without departing from the scope of the following claims, which only define the invention.

**Claims**

1. A method of providing True Effort Miss, TEM, guidance laws for maneuvering a vehicle (10) for reducing or eliminating miss distance to a target, comprising:

    i) providing a maneuver command for maneuvering the vehicle (10) towards a target;
    **characterized in that** the method comprises:
    repeatedly, performing the following stages until eliminating said miss distance, including:
    ii) propagating in time vehicle's (10) equation of motion according to the maneuver command from a current spatial location of the vehicle to an estimated vehicle Final Interception Point position wherein said propagation takes into account at least one of vehicle's auto-pilot dynamics, maneuver induced drag effects and varying maneuver capability effect;;
    iii) calculating a miss distance between the estimated vehicle Final Interception Point position and an estimated target Final Interception Point position; and
    iv) updating the maneuver command to an updated maneuver command for reducing or eliminating the miss distance, wherein the updating the maneuver command is based at least on the maneuver command, on the calculated miss distance and on a time until hit; and
    v) sending the updated maneuver command to a steering system (709) of the vehicle (10),

    said updated maneuver command constituting a maneuver command for the subsequent propagating stage (ii) of said stages (ii) to (v).

2. The method according to Claim 1, wherein said propagation takes into account vehicle's (10) limitation to perform the command substantially in real time and according to the entire motion of the vehicle.

3. The method according to any one of Claims 1 to 2, wherein said updating the command complies with

$$A_{M\_Lift\_com\_new} = A_{M\_Lift\_com\_previous} + 2*TEM/t_{go}^2,$$

    where

    $A_{M\_Lift\_com\_new}$ signifies the new maneuvering command in the current cycle of computation according to the True Effort Miss (TEM) guidance law;
    $A_{M\_Lift\_com\_previous}$ signifies the maneuvering command in the previous cycle of computation according to the TEM guidance law;
    TEM signifies the calculated miss distance; and
    $t_{go}$ signifies the time until hit.

4. The method according to any one of Claims 1 to 3, wherein said target is moving.

5. The method according to any one of Claims 1 to 4, wherein said target is stationary.

6. The method according to any one of Claims 1 to 5, wherein said vehicle (10) being an interceptor missile.

7. A computer program product including a machine-readable memory tangibly embodying a program of instructions executable by the machine for executing the method according to any one of Claims 1 to 6.

8. A system of providing True Effort Miss, TEM, guidance laws for maneuvering a vehicle (10) for reducing or eliminating miss distance to a target, comprising:

a system (600) configured to provide a maneuver command for maneuvering the vehicle (10) towards a target; the system (600) being **characterized in that** it is configured to repeatedly perform the following stages until eliminating said miss distance, including:

i) propagating in time vehicle's (10) equation of motion according to the maneuver command from a current spatial location of the vehicle to an estimated vehicle Final Interception Point position, wherein said propagation takes into account at least one of vehicle's auto-pilot dynamics, maneuver induced drag effects and varying maneuver capability effect;

ii) calculating a miss distance between the estimated vehicle Final Interception Point position and an estimated target Final Interception Point Position; and

iii) updating the command to an updated maneuver command for reducing or eliminating the miss distance, wherein the updating the maneuver command is based at least on the maneuver command, on the calculated miss distance, and on a time until hit; and

iv) sending the updated maneuver command to a steering system (709) of the vehicle (10), said updated maneuver command constituting a maneuver command for the subsequent propagating stage (i) of said stages (i) to (iv).

9. The system according to Claim 8, wherein said propagation takes into account vehicle's (10) limitation to perform the command substantially in real time and according to the entire motion of the vehicle (10).

10. The system according to any one of Claims 8 to 9, wherein said updating the command complies with

$$A_{M\_Lift\_com\_new} = A_{M\_Lift\_com\_previous} + 2*TEM/t_{go}^{2},$$

where

$A_{M\_Lift\_com\_new}$ signifies the new maneuvering command in the current cycle of computation according to the TEM guidance law;

$A_{M\_Lift\_com\_previous}$ signifies the maneuvering command in the previous cycle of computation according to the TEM guidance law;

TEM signifies the calculated miss distance; and

$t_{go}$ signifies the time until hit.

11. The system according to any one of Claims 8 to 10, wherein said target is moving.

12. The system according to any one of Claims 8 to 11, wherein said target is stationary.

13. The system according to any one of Claims 8 to 12, wherein said vehicle (10) being an interceptor missile.


**Patentansprüche**

1. Verfahren zum Bereitstellen von TEM-Anleitungsregeln (True Effort Miss TEM) zum Manövrieren eines Bewegtkörpers (10) zum Verringern oder Beseitigen eines fehlenden Abstandes zu einem Ziel, umfassend:

(i) Bereitstellen eines Manövrierbefehls zum Manövrieren des Bewegtkörpers (10) hin zu einem Ziel; **dadurch gekennzeichnet, dass** das Verfahren umfasst:

bis zur Beseitigung des fehlenden Abstandes erfolgendes, wiederholtes Durchführen der nachfolgenden Stufen, die beinhalten:

(ii) zeitliches Fortschreiben der Bewegungsgleichung des Bewegtkörpers (10) entsprechend dem Manövrierbefehl von einem aktuellen räumlichen Ort des Bewegtkörpers zu einer geschätzten Endabfangpunkt-Position des Bewegtkörpers, wobei die Fortschreibung wenigstens eines von Autopilotdynamiken des Bewegtkörpers, manövrierinduzierten Drag-Effekten und dem Effekt der variierenden Manövrierfähigkeit berücksichtigt;

(iii) Berechnen eines fehlenden Abstandes zwischen der geschätzten Endabfangpunkt-Position des Bewegtkörpers und einer geschätzten Ziel-Endabfangpunkt-Position; und

(iv) Aktualisieren des Manövrierbefehls auf einen aktualisierten Manövrierbefehl zum Verringern oder Beseitigen des fehlenden Abstandes, wobei das Aktualisieren des Manövrierbefehls wenigstens auf dem Manövrierbefehl, dem berechneten fehlenden Abstand und einer Zeit bis zum Einschlag beruht; und

(v) Senden des aktualisierten Manövrierbefehls an ein Lenksystem (709) des Bewegtkörpers (10),

wobei der aktualisierte Manövrierbefehl einen Manövrierbefehl für die nachfolgende Fortschreibungsstufe (ii) der Stufen (ii) bis (v) bildet.

2. Verfahren nach Anspruch 1, wobei die Fortschreibung eine Beschränkung des Bewegtkörpers (10) dahingehend, den Befehl im Wesentlichen in Echtzeit und entsprechend der Gesamtbewegung des Bewegtkörpers auszuführen, berücksichtigt.

3. Verfahren nach einem der Ansprüche 1 bis 2, wobei das Aktualisieren des Befehls

$$A_{M\_Lift\_com\_new} = A_{M\_Lift\_com\_previous} + 2*TEM/t_{go}^2$$

genügt, wobei

$A_{M\_Lift\_com\_new}$ den neuen Manövrierbefehl im aktuellen Zyklus der Berechnung entsprechend der TEM-Anleitungsregel (True Effort Miss TEM) bezeichnet;

$A_{M\_Lift\_com\_previous}$ den Manövrierbefehl im vorherigen Zyklus der Berechnung entsprechend der TEM-Anleitungsregel bezeichnet;

TEM den berechneten fehlenden Abstand bezeichnet; und

$t_{go}$ die Zeit bis zum Einschlag bezeichnet.

4. Verfahren nach einem der Ansprüche 1 bis 3, wobei sich das Ziel bewegt.

5. Verfahren nach einem der Ansprüche 1 bis 4, wobei das Ziel stationär ist.

6. Verfahren nach einem der Ansprüche 1 bis 5, wobei der Bewegtkörper (10) eine Abfangrakete ist.

7. Computerprogrammerzeugnis, das einen maschinenlesbaren Speicher beinhaltet, der physisch ein Programm aus Anweisungen verkörpert, die von der Maschine zum Ausführen des Verfahrens nach einem der Ansprüche 1 bis 6 ausführbar sind.

8. System zum Bereitstellen von TEM-Anleitungsregeln (True Effort Miss TEM) zum Manövrieren eines Bewegtkörpers (10) zum Verringern oder Beseitigen eines fehlenden Abstandes zu einem Ziel, umfassend:

ein System (600), das dafür konfiguriert ist, einen Manövrierbefehl zum Manövrieren des Bewegtkörpers (10) hin zu einem Ziel bereitzustellen;

wobei das System (600) **dadurch gekennzeichnet ist, dass** es dafür konfiguriert ist, bis zur Beseitigung des fehlenden Abstandes wiederholt die nachfolgenden Stufen durchzuführen, die beinhalten:

(i) zeitliches Fortschreiben der Bewegungsgleichung des Bewegtkörpers (10) entsprechend dem Manövrierbefehl von einem aktuellen räumlichen Ort des Bewegtkörpers zu einer geschätzten Endabfangpunkt-Position des Bewegtkörpers, wobei die Fortschreibung wenigstens eines von Autopilotdynamiken des Bewegtkörpers, manövrierinduzierten Drag-Effekten und dem Effekt der variierenden Manövrierfähigkeit berücksichtigt;

(ii) Berechnen eines fehlenden Abstandes zwischen der geschätzten Endabfangpunkt-Position des Bewegtkörpers und einer geschätzten Ziel-Endabfangpunkt-Position; und

(iii) Aktualisieren des Befehls auf einen aktualisierten Manövrierbefehl zum Verringern oder Beseitigen des fehlenden Abstandes,

wobei das Aktualisieren des Manövrierbefehls wenigstens auf dem Manövrierbefehl, dem berechneten fehlenden Abstand und einer Zeit bis zum Einschlag beruht; und

(iv) Senden des aktualisierten Manövrierbefehls an ein Lenksystem (709) des Bewegtkörpers (10),

wobei der aktualisierte Manövrierbefehl einen Manövrierbefehl für die nachfolgende Fortschreibungsstufe (i) der Stufen (i) bis (iv) bildet.

9. System nach Anspruch 8, wobei die Fortschreibung eine Beschränkung des Bewegtkörpers (10) dahingehend, den Befehl im Wesentlichen in Echtzeit und entsprechend der Gesamtbewegung des Bewegtkörpers (10) auszuführen, berücksichtigt.

10. System nach einem der Ansprüche 8 bis 9, wobei das Aktualisieren des Befehls

$$A_{M\_Lift\_com\_new} = A_{M\_Lift\_com\_previous} + 2*TEM/t_{go}^2$$

genügt, wobei

$A_{M\_Lift\_com\_new}$ den neuen Manövrierbefehl im aktuellen Zyklus der Berechnung entsprechend der TEM-Anleitungsregel bezeichnet;

$A_{M\_Lift\_com\_previous}$ den Manövrierbefehl im vorherigen Zyklus der Berechnung entsprechend der TEM-Anleitungsregel bezeichnet;

TEM den berechneten fehlenden Abstand bezeichnet; und

$t_{go}$ die Zeit bis zum Einschlag bezeichnet.

11. System nach einem der Ansprüche 8 bis 10, wobei sich das Ziel bewegt.

12. System nach einem der Ansprüche 8 bis 11, wobei das Ziel stationär ist.

13. System nach einem der Ansprüche 8 bis 12, wobei der Bewegtkörper (10) eine Abfangrakete ist.

**Revendications**

1. Procédé de fourniture de lois de guidage de manquement à effort vrai TEM, soit True Effort Miss, pour manœuvrer un véhicule (10) afin de réduire ou d'éliminer la distance de manquement d'une cible, comprenant :

i) la fourniture d'une commande de manœuvre pour manœuvrer le véhicule (10) vers une cible ;

**caractérisé en ce que** le procédé comprend :

de manière répétée, la mise en œuvre des étapes suivantes jusqu'à élimination de ladite distance de manquement, comprenant :

ii) la propagation dans le temps de l'équation de déplacement du véhicule (10) conformément à la commande de manœuvre d'une position spatiale actuelle du véhicule à une position estimée du point d'interception final du véhicule, dans lequel ladite propagation prend en compte au moins un élément parmi les paramètres dynamiques d'autopilotage du véhicule, les effets de traînée induite par la manœuvre, et l'effet d'une capacité de manœuvre variable ;

iii) le calcul d'une distance de manquement entre la position estimée du point d'interception final du véhicule et une position estimée du point d'interception final de la cible ; et

iv) l'actualisation de la commande de manœuvre à une commande de manœuvre actualisée pour réduire ou éliminer la distance de manquement, dans lequel l'actualisation de la commande de manœuvre est basée au moins sur la commande de manœuvre, sur la distance de manquement calculée et sur un temps jusqu'à l'impact ; et

v) l'envoi de la commande de manœuvre actualisée à un système de direction (709) du véhicule (10), ladite commande de manœuvre actualisée constituant une commande de manœuvre pour l'étape de propagation subséquente (ii) desdites étapes (ii) à (v).

2. Procédé selon la revendication 1, dans lequel ladite propagation prend en compte la limitation du véhicule (10) pour la mise en œuvre de la commande substantiellement en temps réel et conformément au mouvement complet du véhicule.

3. Procédé selon l'une quelconque des revendications 1 et 2, dans lequel ladite actualisation de la commande répond à l'équation

$$A_{M\_Lift\_com\_new} = A_{M\_Lift\_com\_previous} + 2*TEM/t_{go}^2,$$

où

$A_{M\_Lift\_com\_new}$ désigne la nouvelle commande de manœuvre dans le cycle de calcul actuel conformément à la loi de guidage de manquement à effort vrai (TEM) ;
$A_{M\_Lift\_com\_previous}$ désigne la commande de manœuvre dans le cycle de calcul antérieur conformément à la loi de guidage TEM ;
TEM désigne la distance de manquement calculée ; et
$t_{go}$ désigne le temps jusqu'à l'impact.

4. Procédé selon l'une quelconque des revendications 1 à 3, dans lequel ladite cible se déplace.

5. Procédé selon l'une quelconque des revendications 1 à 4, dans lequel ladite cible est stationnaire.

6. Procédé selon l'une quelconque des revendications 1 à 5, dans lequel ledit véhicule (10) est un missile intercepteur.

7. Produit logiciel comprenant une mémoire lisible par une machine incorporant tangiblement un programme d'instructions exécutables par la machine pour exécuter le procédé selon l'une quelconque des revendications 1 à 6.

8. Système de fourniture de lois de guidage de manquement à effort vrai TEM pour manœuvrer un véhicule (10) afin de réduire ou d'éliminer la distance de manquement d'une cible, comprenant :

un système (600) configuré pour fournir une commande de manœuvre pour manœuvrer le véhicule (10) vers une cible ;
le système (600) étant **caractérisé en ce qu'**il est configuré pour mettre en œuvre de manière répétée les étapes suivantes jusqu'à élimination de ladite distance de manquement, comprenant :

i) la propagation dans le temps de l'équation de déplacement du véhicule (10) conformément à la commande de manœuvre d'une position spatiale actuelle du véhicule à une position estimée du point d'interception final, dans lequel ladite propagation prend en compte au moins un élément parmi les paramètres dynamiques d'autopilotage du véhicule, les effets de traînée induite par la manœuvre et l'effet de capacité de manœuvre variable ;
ii) le calcul d'une distance de manquement entre la position estimée du point d'interception final du véhicule et une position estimée du point d'interception final de la cible ; et
iii) l'actualisation de la commande à une commande de manœuvre actualisée pour réduire ou éliminer la distance de manquement, dans lequel l'actualisation de la commande de manœuvre est basée au moins sur la commande de manœuvre, sur la distance de manquement calculée et sur un temps jusqu'à l'impact ; et
iv) l'envoi de la commande de manœuvre actualisée à un système de direction (709) du véhicule (10), ladite commande de manœuvre actualisée constituant une commande de manœuvre pour l'étape de propagation subséquente (i) desdites étapes (i) à (iv).

9. Système selon la revendication 8, dans lequel ladite propagation prend en compte la limitation du véhicule (10) pour la mise en œuvre de la commande substantiellement en temps réel et conformément au mouvement complet du véhicule (10) .

**10.** Système selon l'une quelconque des revendications 8 et 9, dans lequel ladite actualisation de la commande répond à l'équation

$$A_{M\_Lift\_com\_new} = A_{M\_Lift\_com\_previous} + 2*TEM/t_{go}^2,$$

où

$A_{M\_Lift\_com\_new}$ désigne la nouvelle commande de manœuvre dans le cycle de calcul actuel conformément à la loi de guidage TEM ;

$A_{M\_Lift\_com\_previous}$ désigne la commande de manœuvre dans le cycle de calcul antérieur conformément à la loi de guidage TEM ;

TEM désigne la distance de manquement calculée ; et

$t_{go}$ désigne le temps jusqu'à l'impact.

**11.** Système selon l'une quelconque des revendications 8 à 10, dans lequel ladite cible se déplace.

**12.** Système selon l'une quelconque des revendications 8 à 11, dans lequel ladite cible est stationnaire.

**13.** Système selon l'une quelconque des revendications 8 à 12, dans lequel ledit véhicule (10) est un missile intercepteur.

Fig. 1

Fig. 2A

Fig. 2B

Fig. 2C

Fig. 2D

Fig. 2E

**Fig. 3**

Zero Maneuver — 301

Interceptor propagation — 302

Estimated Interceptor position at FIP

303

+ / − (summing node)

Estimated Target position at FIP — 304

ZEM — 305

Guide Law (gain) — 306

maneuver command

**Fig. 4**

T

12

14

$Y_2$

$Y_1$

15

$X_0 = Y_0$

46

45

TEM

ZEM

44

42

43

16

ZEM cycle ②

ZEM cycle ①

13

11

10

Fig. 5A

Fig. 5B

Fig. 5C

Fig. 5D

Fig. 6

EP 2 807 443 B1

704 —

Onboard
seeker/GD Base
RDR

703
Target
state
vector

701
TEM Guide
Law System

702
Maneuvering
command

708
Auto Pilot

706 —

INS/GPS
GND BASE RDR

705
Interceptor
State Vector

709
Steering
Mechanism

707 —

Database
- Autopilot performance
- Aerodynamic inefficiency
- Thrust model
- Target model

**Fig. 7**

801'

803
Steering    INS

802

801

800

804

801

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6006145 A
- US 20040155142 A
- US 7487933 B
- US 7394047 B